# EUROPEAN PATENT APPLICATION

(11) **EP 2 234 188 A1**
(43) Date of publication of application: **29.09.2010**
(21) Application number: 09156394.0
(22) Date of filing: 27.03.2009
(51) Int. Cl.: H01M 2/02, H01M 2/08

(54) **Battery apparatus**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Damen, Daniel Martijn

(57) **Abstract**

The invention relates to a battery apparatus comprising an inner part (1) comprising at least electrodes and a battery electrolyte (92). A first non-metallic package (2) encloses the inner part (1) and a second non-metallic package (3) encloses the first package (2). The first package (2) and the second package (3) are adapted for holding the battery electrolyte (92) in the inner part (1) and for providing a fluid-tight protection. These packages reduce the probability of a leakage of a fluid like moisture or oxygen into the packages, wherein at the same time the battery electrolyte is held within the packages. Furthermore, since the packages are non-metallic, eddy currents are not induced in these packages. The battery apparatus has therefore an improved battery performance and can be used in varying magnetic fields.

## Description

### FIELD OF THE INVENTION

The present invention relates to a battery apparatus and a method for manufacturing the battery apparatus. The invention relates further to a package material for sealing an inner part of the battery apparatus, a combination of an electrical device and the battery apparatus, a magnetic resonance imaging system comprising the combination and an inductive wireless power transmission system comprising the combination.

### BACKGROUND OF THE INVENTION

US 6,067,474 discloses a rechargeable battery like a rechargeable lithium ion battery in a housing. The housing is preferentially made of metal, but can also be made of a plastic material for reducing eddy currents.

The use of plastic material for housing the rechargeable battery reduces the negative effects caused by eddy currents in varying magnetic fields, but they also allow fluids like moisture or oxygen to penetrate the housing and to come into contact with the inner part of the battery comprising the electrodes and the battery electrolyte. This adversely influences the battery and reduces the battery performance.

### SUMMARY OF THE INVENTION

It is an object of the present invention to provide a battery apparatus, which has an improved battery performance and can be used with varying magnetic fields. It is a further object of the present invention to provide a corresponding method for manufacturing the battery apparatus, a magnetic resonance imaging system comprising the battery apparatus, an inductive wireless power transmission system comprising the battery apparatus, and a combination of a coil and the battery apparatus for being used in at least one of the magnetic resonance imaging system and the inductive wireless power transmission system.

In an aspect of the present invention a battery apparatus is provided, wherein the battery apparatus comprises:
- an inner part comprising at least electrodes and a battery electrolyte,
- at least a first non-metallic package and a second non-metallic package, wherein the first package encloses the inner part and the second package encloses the first package,
wherein the first package and the second package are adapted for holding the battery electrolyte in the inner part and for providing a fluid-tight protection.

Since at least two packages are used for holding the battery electrolyte and for providing a fluid-tight protection, the materials of the first package and the second package can be selected such that both functions are fulfilled, holding the battery electrolyte in the inner part of the battery apparatus and providing a fluid-tight protection. In particular, the first package can be adapted such that the battery electrolyte is held in the inner part of the battery apparatus and the second package can be adapted to provide a fluid-tight protection. Preferentially, the first package and the second package can be adapted independently from each other for fulfilling the two functions, holding the battery electrolyte in the inner part of the battery apparatus and providing a fluid-tight protection. The probability of a leakage of a fluid like moisture or oxygen into the packages is therefore strongly reduced, i.e. adverse effects on the battery performance caused by a fluid like moisture or oxygen are therefore strongly reduced or not present at all. Furthermore, since the first package and the second package are non-metallic packages, eddy currents are not induced in these packages, i.e. in a varying magnetic field less eddy currents are generated in a battery apparatus comprising these packages. The battery apparatus has therefore an improved battery performance and can be used in varying magnetic fields.

The inner part of the battery apparatus is preferentially a battery stack comprising preferentially at least three layers, a first layer being a positive electrode, a second layer being a negative electrode, and a third layer being a separator sandwiched between the first layer and the second layer for separating the positive and negative electrodes. In particular, the inner part can comprise several of the aforementioned sandwiched structures comprising the positive electrode, the negative electrode and the sandwiched separator, wherein preferentially the sandwiched structures are connected in parallel. The battery package is preferentially immersed in the battery electrolyte, wherein the battery electrolyte is kept within at least one of the first package and the second package, in particular, within the first package, such that the battery stack remains immersed in the battery electrolyte.

The battery apparatus is preferentially a rechargeable battery, in particular, a rechargeable lithium ion battery.

It is preferred that the first package comprises a package layer being an electrolyte barrier layer.

The electrolyte barrier layer is or comprises preferentially a ceramic barrier layer.

It is also preferred that the electrolyte barrier layer has a multiple-layer structure, wherein an effective barrier layer is sandwiched between an exterior layer made of or comprising polypropylene or polyester and an interior sealing layer made of or comprising polyethylene.

The effective barrier layer forms a barrier for the electrolyte and preferentially is made of or comprises ceramic or other materials which provide a barrier for the electrolyte.

Such an electrolyte barrier film can easily be processed in a battery packaging process and is chemically and electrochemically stable towards the electrolyte.

It is further preferred that the second package comprises a package material being a plastic material coated with a fluid barrier layer.

The fluid barrier layer is preferentially an oxygen-moisture barrier layer.

It is further preferred that the fluid barrier layer comprises at least one material of a group consisting of silicon nitride, silicon oxide and aluminum oxide.

The plastic material is preferentially a plastic material which can be shaped to the required form, for example, by injection moulding. On this plastic material the fluid barrier layer is deposited being an inorganic layer which is preferentially a layer comprising at least one material of a group consisting of silicon nitride, silicon oxide or aluminum oxide. The deposition is preferentially performed by a plasma enhanced chemical vapour deposition (PECVD) technique. However, also other deposition techniques can be used for depositing the inorganic layer on the plastic material.

The second package with the plastic material coated with the fluid barrier layer can be produced by using the PECVD process, without generating pinholes in the fluid barrier layer. This guarantees an effective fluid-tight property of the fluid barrier layer. Furthermore, the fluid barrier layer produced by the PECVD process is oxidation resistant. In contrast, common silicon nitride layers are generally oxidized over approximately one year time and lose their function as fluid barrier layer.

It is further preferred that the second package comprises a package material being glass. It is further preferred that the second package only comprises glass. Glass is a cheap material and can easily be processed.

It is further preferred that the glass is coated with a fluid barrier layer. Preferentially, the fluid barrier layer comprises at least one material of a group consisting of silicon nitride, silicon oxide and aluminum oxide. This further improves the fluid-tight property of the second package.

It is further preferred that the first package and the second package are formed as a multi-layer package comprising at least a first layer being a sealant for holding the battery electrolyte in the inner part of the battery apparatus, a second layer for providing a fluid barrier and a third layer being a protection layer, wherein the second layer is sandwiched between the first and third layers.

The first layer is preferentially a polypropylene layer and has preferentially a thickness of 50 µm.

The second layer is preferentially a coated plastic or a glass layer. The coating on the plastic is preferentially a fluid barrier coating. The coating preferentially is made of or comprises at least one material of a group consisting of silicon nitride, silicon oxide and aluminum oxide. This coating has preferentially a thickness of about 100 nm. The plastic layer can have a thickness of 50 µm. The glass layer is preferentially not coated and can have a thickness of about 100 µm.

The third layer is preferentially a polyethylene terephthalate layer. The third layer is preferentially adapted to protect the second layer from possible damages like scratches.

The first layer is preferentially an interior layer, i.e. it faces the inner part of the battery apparatus, and the third layer is preferentially an exterior layer.

It is further preferred that at least one of the first and second packages encloses a getter. The getter is preferentially located outside the first package and inside the second package. The getter removes fluid like oxygen or moisture and therefore further reduces the probability of an adverse effect of fluids like moisture or oxygen on the battery performance.

It is further preferred that at least one of the first package and the second package is formed as at least two components, which are attached together for forming an encasement.

The at least two components are preferentially attached together by a glue. In an embodiment, the at least two components of the second package are attached together by using a glue, wherein at least two components of the first package are preferentially thermally sealed, in particular, by heating up polypropylene under pressure.

This allows easily enclosing the inner part of the battery apparatus within the first package and/or the first package within the second package by attaching the respective two components together. If a glue is used for attaching the at least two components together, in particular, if a glue is used for attaching the at least two components of the second package together and if the second package is made of glass, before applying the glue onto the components, preferentially the components are cleaned by using an ultraviolet ozone surface treatment method. If the second package is made of plastic material coated with a fluid barrier layer, the sites where the glue is to be applied should be cleaned with isopropanol before applying the glue. The glue is preferentially a two-components glue, wherein the two components of the glue are blended before the glue is applied to the components of the first and/or second package, in particular, applied on the edge of the first and/or second package. The glue is preferentially a type of polymer material.

The gluing process is preferentially carried out in an inert gas-filled glove box, e.g. nitrogen, argon. The first and/or second package is preferentially left in the glove box under pressure for, for example, 24 hours in order for the glue to completely harden.

It is further preferred that the electrodes are slotted. Since eddy currents can only circulate in smaller areas, eddy currents in the electrodes are reduced.

An aluminum foil and a copper foil, respectively, are preferentially used as current collectors for the positive electrode and the negative electrode in the inner part of the battery apparatus.

The slits in the electrodes have preferentially a width of 0.2 mm for the positive electrode and a width of 0.17 mm for the negative electrode. The stripes between two neighboring slits have preferentially a width of 0.9 mm for the positive electrode and 0.93 mm for the negative electrode. This is to prevent any possible formation of lithium metal dendrite. However, the slits and the stripes between two neighboring slits can also have other widths. These slits can, for example, be arranged transversely or longitudinally in the electrodes.

In a further aspect of the present invention, a package material for sealing an inner part of a battery apparatus is provided, wherein the inner part of the battery apparatus comprises at least electrodes and a battery electrolyte, wherein the package material comprises at least a first non-metallic package material and a second non-metallic package material, wherein the first package material is adapted for enclosing the inner part and wherein the second package material is adapted for enclosing the second package material, wherein the first package and the second package are adapted for holding the battery electrolyte in the inner part and for providing a fluid-tight protection.

In a further aspect of the present invention a method for manufacturing a battery apparatus is provided, wherein the method comprises the steps of:
- providing an inner part of the battery apparatus comprising at least two electrodes,
- providing a first non-metallic package and a second non-metallic package,
- enclosing the inner part with the first package and enclosing the first package with the second package,
- providing the inner part of the battery apparatus with battery electrolyte,
wherein the first package and the second package are adapted for holding the battery electrolyte in the inner part and for providing a fluid-tight protection.

It should be noted that the steps defined in the previous paragraph do not have to be performed in the sequence in which these steps are cited in the previous paragraph. For example, the inner part of the battery apparatus can be provided with the battery electrolyte after the inner part has been enclosed with the first package and before the first package has been enclosed with the second package.

In a further aspect of the invention a combination of an electrical device and the battery apparatus as defined in claim 1 is provided, wherein the electrical device and the battery apparatus are electrically connected to each other for powering the electrical device.

This may allow using the combination of the electrical device and the battery apparatus in a varying magnetic field.

The electrical device can be any electrical device which can be powered by the battery apparatus, for example, an implant being usable within a person like a cardiac pacemaker or an auxiliary device for a magnetic resonance imaging system.

It is preferred that the combination of the electrical device and the battery apparatus is adapted for being used in at least one of a magnetic resonance imaging system and an inductive wireless power transmission system. It is further preferred that the combination of the electrical device and the battery apparatus is adapted for being used in a magnetic resonance imaging system, wherein the electrical device comprises a receiving coil for receiving magnetic resonance signals and a processing unit for processing the received magnetic resonance signals, wherein the battery apparatus is adapted for powering the processing unit. The electrical device preferentially further comprises a power coil, which can be powered inductively and which can be adapted for charging the battery or for directly powering the processing unit. The electrical device preferentially further comprises a sending unit for sending the processed magnetic resonance signals to a corresponding receiving unit of the magnetic resonance imaging system for further processing the magnetic resonance signals, in particular, for reconstruction an image representation. Instead of or in addition to the processing unit, the electrical device can comprise other sensor electronics for the receiving coil, which can be powered by the battery apparatus and/or the power coil.

The receiving coil is preferentially a radio frequency coil. The power coil is preferentially a coil being adapted for frequencies being smaller than the frequencies for which the receiving coil is adapted.

In a further aspect of the present invention a magnetic resonance imaging system is provided, wherein the magnetic resonance imaging system comprises the combination of the electrical device and the battery apparatus as defined in claim 10.

Since the electrical device is powered by a battery apparatus which can be used in a varying magnetic field, in particular, which can be used in a magnetic resonance imaging system, it is not necessary to use, for example, protected cables for powering the electrical device. These protected cables are expensive, inconvenient for operators and can make patients uncomfortable. The powering of the electrical device by the battery apparatus allows therefore to provide a less expensive and more convenient magnetic resonance imaging system, which can make patients, feel more comfortable.

In a further aspect of the present invention an inductive wireless power transmission system is provided, wherein the inductive wireless power transmission system comprises a power transmitting unit and a power receiving unit, wherein at least one of the power transmitting unit and the power receiving unit comprises the combination of the electrical device and the battery apparatus as defined in claim 10, wherein the electrical device is adapted to perform at least one of transmitting inductive power and receiving inductive power. The electrical device preferentially comprises a coil for transmitting and/or receiving power inductively.

Since the battery apparatus can be used in varying magnetic fields, the electrical device, in particular, the coil, can cooperate with the battery apparatus for transmitting and/or receiving power inductively.

It shall be understood that the battery apparatus of claim 1, the package material of claim 8, the method for manufacturing a battery apparatus of claim 9, the combination of an electrical device and the battery apparatus of claim 10, the magnetic resonance imaging system of claim 13, and the inductive wireless power transmission system of claim 14 have similar and/or identical preferred embodiments as defined in the dependent claims.

It shall be understood that a preferred embodiment of the invention can also be any combination of the dependent claims with the respective independent claim.

### BRIEF DESCRIPTION OF THE DRAWINGS

These and other aspects of the invention will be apparent from and elucidated with reference to the embodiments described hereinafter. In the following drawings:
Fig. 1 shows schematically and exemplarily a battery apparatus,
Fig. 2 shows schematically and exemplarily a cross section of a first package of the battery apparatus,
Fig. 3 shows schematically and exemplarily a cross section of a second package of the battery apparatus,
Fig. 4 shows schematically and exemplarily a further battery apparatus,
Fig. 5 shows schematically and exemplarily a cross section of a package of the further battery apparatus,
Fig. 6 shows schematically and exemplarily a cross section of a package of a battery apparatus,
Fig. 7 shows schematically and exemplarily a battery stack to be sealed in apackage of a battery apparatus,
Fig. 8 shows schematically and exemplarily a positive electrode of a battery apparatus,
Fig. 9 shows schematically and exemplarily a negative electrode of the battery apparatus,
Fig. 10 shows schematically and exemplarily a magnetic resonance imaging system comprising a battery apparatus,
Fig. 11 shows schematically and exemplarily an inductive wireless power transmission system comprising a battery apparatus,
Fig. 12 shows a flow chart illustrating a method for manufacturing a battery apparatus,
Fig. 13 shows schematically and exemplarily an inner part of the battery apparatus enclosed by a first package during performing the method for manufacturing a battery apparatus,
Fig. 14 shows schematically and exemplarily an aluminum-plastic film enclosing the first package and the inner part of the battery apparatus during performing the method for manufacturing a battery apparatus,
Fig. 15 shows schematically and exemplarily a second package being a glass package, and
Fig. 16 shows schematically and exemplarily a cross section through a battery apparatus comprising the glass package.

### DETAILED DESCRIPTION OF EMBODIMENTS

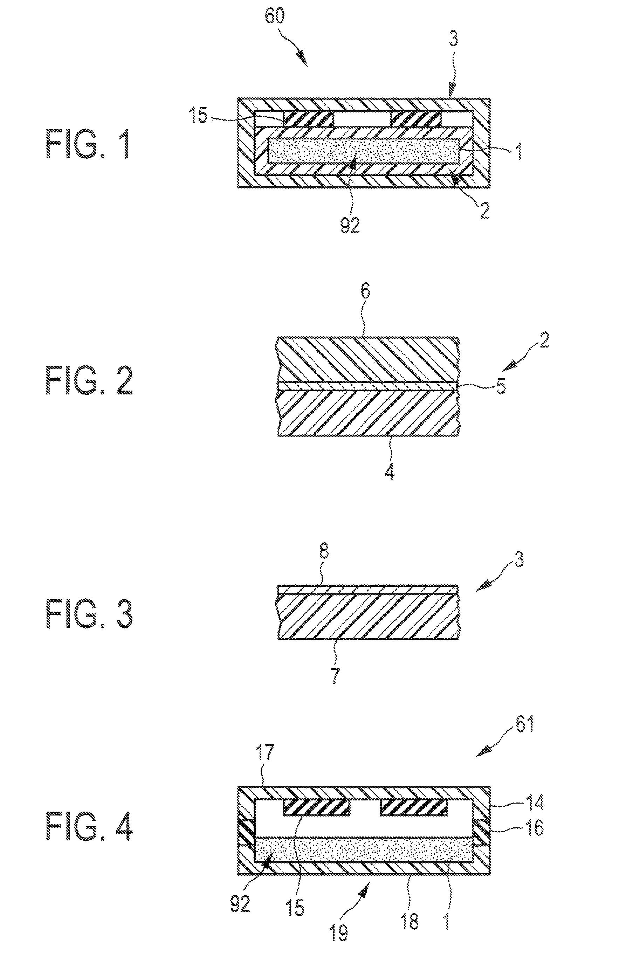

Fig. 1 shows schematically and exemplarily a battery apparatus 60 comprising an inner part 1. The inner part 1 comprises at least a positive electrode, a negative electrode and a separator for separating the positive electrode and the negative electrode. The inner part comprises further battery electrolyte 92, in which the two electrodes and the separator are immersed.

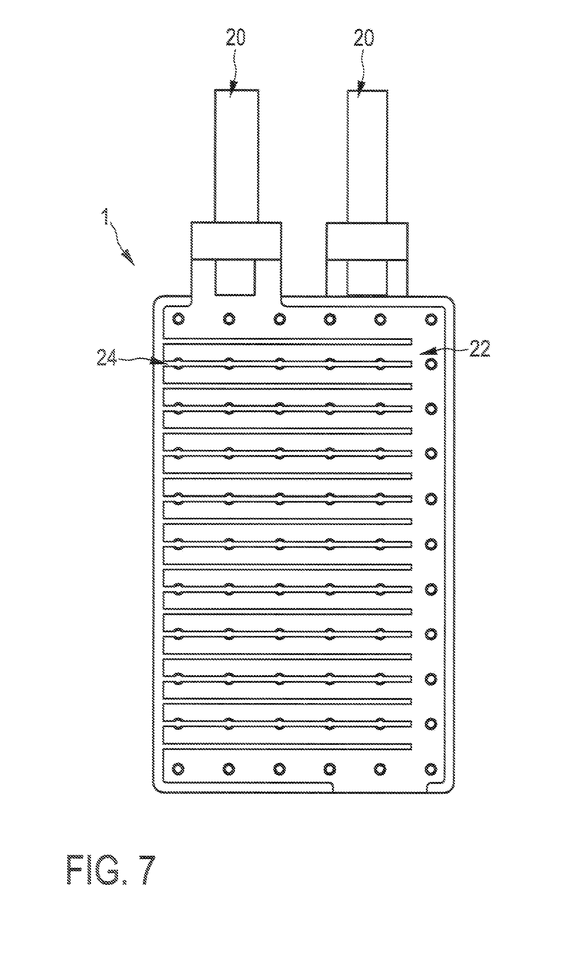

In Fig. 1, for clarity reasons only the battery electrolyte 92 of the inner part 1 of the battery apparatus 60 is shown and not, for example, the at least two electrodes. The electrodes will be shown in more detail in Figs. 7 to 9 and described in the corresponding description further below.

The battery apparatus 60 is a rechargeable battery, in particular, a rechargeable lithium ion battery.

The battery apparatus 60 comprises a first non-metallic package 2 and a second non-metallic package 3, wherein the first package 2 encloses the inner part 1 of the battery apparatus and wherein the second package 3 encloses the first package 2. The first package 2 is adapted for holding the battery electrolyte in the inner part 1 of the battery apparatus and the second package 3 is adapted for providing a fluid-tight protection. The second package 3 is preferentially adapted to form a barrier for moisture and oxygen.

A cross section of an embodiment of the first package 2 is schematically and exemplarily shown in Fig. 2. In the embodiment shown in Fig. 2, the first package 2 is formed in a multiple-layer structure with a polypropylene or polyester layer as exterior layer 6, a polyethylene layer as interior sealing layer 4 and a sandwiched effective barrier layer 5. The barrier layer 5 comprises preferentially a material or is preferentially made of a material that is chemically and electrochemically stable towards the electrolyte. Preferentially, a ceramic material is used for the barrier layer 5. The barrier layer 5 forms a barrier for the electrolyte and is therefore an electrolyte barrier layer.

A cross section of an embodiment of the second package 3 is schematically and exemplarily shown in Fig. 3. The embodiment of the second package 3 shown in Fig. 3 is a layer of a plastic material 7 coated with a fluid barrier layer 8. The fluid barrier layer 8 is an oxygen-moisture barrier layer. Thus, the fluid barrier layer is adapted such that oxygen and moisture can substantially not penetrate this layer. The fluid barrier layer 8 is, in this embodiment, a layer of silicon nitride. In another embodiment, the fluid barrier layer can comprise another material like silicon oxide or aluminum oxide.

The material of the plastic layer 7 is preferentially a plastic material which can be shaped to the required form, for example, by injection moulding. This plastic layer 7 is coated with the fluid barrier layer 8 by performing a PECVD technique. In another embodiment, also other deposition techniques can be used for depositing the fluid barrier layer 8 on the plastic layer 7. The plastic layer 7 is preferentially made of or preferentially comprises polyimide.

Instead or in addition to the use of the plastic layer 7 with the fluid barrier layer 8 glass can be used as the package material of the second package 3. The glass material is not coated with a fluid barrier layer. However, in another embodiment the glass material can be coated with the fluid barrier layer.

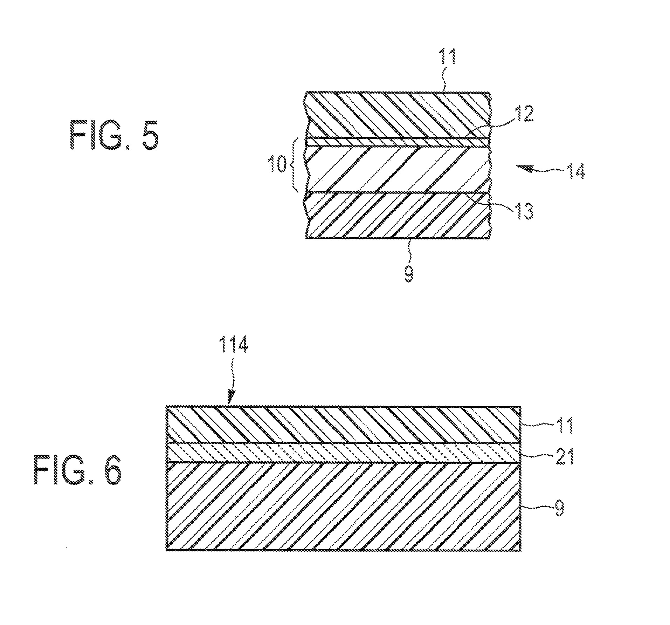

A further embodiment of the battery apparatus 61 with an inner part 1 of the battery apparatus is schematically and exemplarily shown in Fig. 4. The battery apparatus 61 comprises a first package and a second package, which are formed as a multi-layer package 14. A cross section of an embodiment of such a multi-layer package 14 is schematically and exemplarily shown in Fig. 5. This embodiment of the multi-layer package 14 comprises a first layer 9 being a sealant for holding the battery electrolyte in the inner part 1 of the battery apparatus, a second layer 10 for providing a fluid barrier and a third layer 11 being a protection layer, wherein the second layer 10 is sandwiched between the first and the third layers 9, 11.

The first layer 9 is preferentially a polyethylene layer having preferentially a thickness between 10 and 100 µm, further preferred between 30 and 70 µm and further preferred of 50 µm.

The second layer 10 comprises a plastic layer 13 on which a fluid barrier layer 12 is coated. Also, this fluid barrier layer 12 is preferentially a material which makes the second layer 10 fluid-tight. The fluid barrier layer is preferentially made of or comprises an inorganic material like silicon nitride, silicon oxide or aluminum oxide. The fluid barrier layer is preferentially deposited on the plastic layer by PECVD and has preferentially a thickness between 10 and 200 nm, further preferred between 50 and 150 nm and has further preferred a thickness of 100 nm. The plastic layer 13 has preferentially a thickness between 10 and 100 µm, further preferred between 30 and 70 µm and it is further preferred that the plastic layer 13 has a thickness of 50 µm. The plastic layer 13 is preferentially made of or preferentially comprises polyimide.

The third layer 11 is a polyethylene terephtalate layer and is used for protecting the second layer 10 from possible damages such as scratches. The third layer 11 has preferentially a thickness between 25 and 50 µm, further preferred between 30 and 40 µm, and it is further preferred that the third layer 11 has a thickness of 35 µm.

Fig. 6 shows schematically and exemplarily a further embodiment 114 of the multi-layer package which can be used for the battery apparatus 61 shown in Fig. 4 instead of the multi-layer package 14.

The multi-layer package 114 comprises also a first layer 9 and a third layer 11, which correspond to the first layer and the second layer which have been described above with reference to Fig. 5, and a second layer 21 being a glass layer.

Referring again to Fig. 1, the second package 3 encloses getters 15. The getters 15 are adapted to remove fluid like oxygen or moisture. Also the battery apparatus 61 shown in Fig. 4 comprises getters 15 which are enclosed by the multi-layer package 14. In the embodiments shown in Figs. 1 and 4 and also in further embodiments the getters 15 can be omitted.

In Fig. 4 it is shown that the first package and the second package, i.e. the multi-layer package 14 in this embodiment, are formed of two components 17, 18, which are attached together for forming an encasement 19. Also the first package 2 and the second package 3 shown in Fig. 1 can comprise two components, which are attached together for forming an encasement.

The at least two components can be attached together by thermally sealing or by using a glue. Preferentially, the first package 2 consists of at least two components, which are thermally sealed, whereas the second package 3 consists of at least two components, which are attached together by using a glue. The multi-layer package 14 can also comprise at least two components, which can be attached together by thermally sealing the first layer 9, in particular, by thermally sealing the polypropylene layer 9. The at least two components of the multi-layer package 14 can also be attached together by using a glue. In Fig. 4, it is shown that the two components 17, 18 are attached together by using the glue 16.

Before applying the glue onto the components, preferentially the surface of the components where the glue is to be applied is cleaned by isopropanol. The glue is preferentially a two-components glue, wherein the two components of the glue are blended before the glue is applied to the components of the first and/or second package, in particular, applied on the edge of the first and/or second package. The glue is preferentially a type of polymer material. The gluing process is preferentially carried out in an inert gas-filled glove box, for example, a glove box filled with nitrogen or argon.

Fig. 7 shows schematically and exemplarily in more detail the inner part 1 of a battery apparatus. The inner part 1 is a battery stack comprising a positive electrode 22, a negative electrode, and a separator arranged between the positive electrode 22 and the negative electrode. The positive electrode 22, the separator, and the negative electrode are immersed in the battery electrolyte. Battery leads 20 are attached to the positive and negative electrodes, respectively. The positive and negative electrodes are preferentially flat, but they can also be curved.

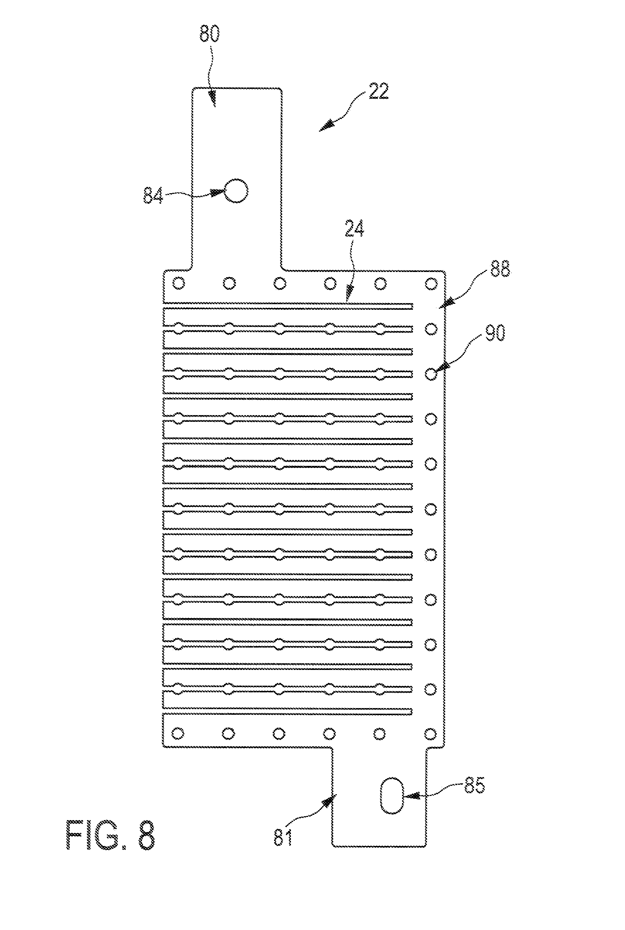

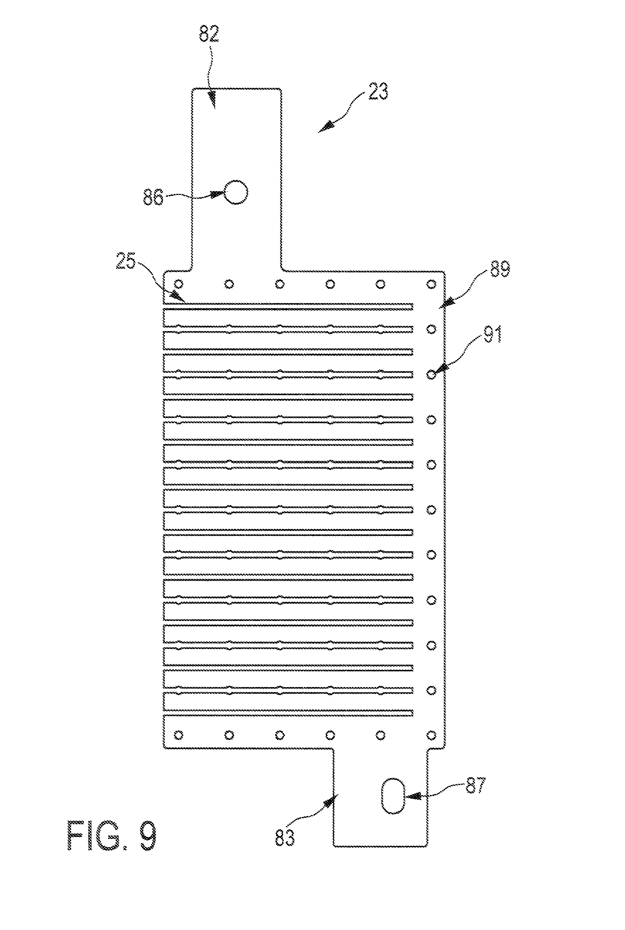

Fig. 8 shows schematically and exemplarily the positive electrode 22 of the inner part 1 of the battery apparatus and Fig. 9 shows schematically and exemplarily the negative electrode 23 of the inner part 1 of the battery apparatus. The electrodes 22, 23 comprise slits 24, 25. In the orientation shown in Figs. 8 and 9, the slits are horizontally oriented. In another embodiment, the slits can also comprise another orientation, for example, they can be vertically oriented in the orientation shown in Figs. 8 and 9.

The positive electrode 22 is preferentially made of LiCoO₂ or LiNi_{0.8}Co_{0.2}O₂ or LiMn₂O₄ or LiCo_{1/3}Ni_{1/3}Mn_{1/3}O₂ or LiFePO₄ or LiMnPO₄ or other appropriate materials coated on an aluminum foil as current collector and the negative electrode 23 is preferentially made of graphite or Li₄Ti₅O₁₂ or Li_{1.1}V_{0.9}O₂+graphite or Co-Sn-C amorphous or other appropriate materials coated on a copper foil as current collector. The slits 24 of the positive electrode 23 have a width of 0,2 mm and the slits 25 of the negative electrode have a width of 0,17 mm. The stripes between two neighboring slits have preferentially a width of 0,9 mm for the positive electrode 22 and a width of 0,93 mm for the negative electrode 23. However, in other embodiments the dimensions of the electrodes, in particular, the width of the slits and of the stripes between two neighboring slits, can be different.

The separator is made of a porous material and functions as an insulator to prevent the positive and negative electrodes 22, 23 from electrical contact, wherein the separator allows ionic conductivity so that the battery electrolyte can penetrate the separator. The separator is preferentially or comprises preferentially a polypropylene membrane or a polypropylene/polyethylene/polypropylene-tri layer membrane. The separator has preferentially a thickness between 15 and 50 µm, further preferred between 20 and 40 µm, and the separator has further preferred a thickness of 30 µm.

In the orientation shown in Figs. 8 and 9, the positive and negative electrodes 22, 23 comprise upper protrusions 80, 82 and lower protrusions 81, 83. These protrusions 80, 81, 82, 83 comprise holes 84, 85, 86, 87. The protrusions with the holes are preferentially used to align the positive and negative electrodes 22, 23 when assembling the battery stack 1. The lower protrusions 81, 83 are to be cut after the battery stack has been assembled. The battery leads 20 are welded to the upper protrusions 80, 82. These upper protrusions 80, 82 can also be termed as tabs.

In this embodiment, the electrodes 22, 23 comprise a rectangular region 88, 89 arranged between the upper and lower protrusions 80, 81, 82, 83. This intermediate rectangular region 88, 89 comprises holes 90, 91. These holes are distributed all over the intermediate rectangular region 88, 89, for example, they are located within the slits 24, 25, but also along the edge of the intermediate rectangular region 88, 89. The holes 90, 91 are used to accommodate polymer rivets that provide mechanical pressure to hold the electrodes 22, 23 and the separator in tight contact, maintaining a very stable mechanical structure. Such an inner part of the battery apparatus is described in more detail in "High energy density strategies: from hydride-forming materials research to battery integration", P.H.L. Notten et al., Journal of Power Sources 129, 2004, pages 45 to 54, which is therewith incorporated by reference.

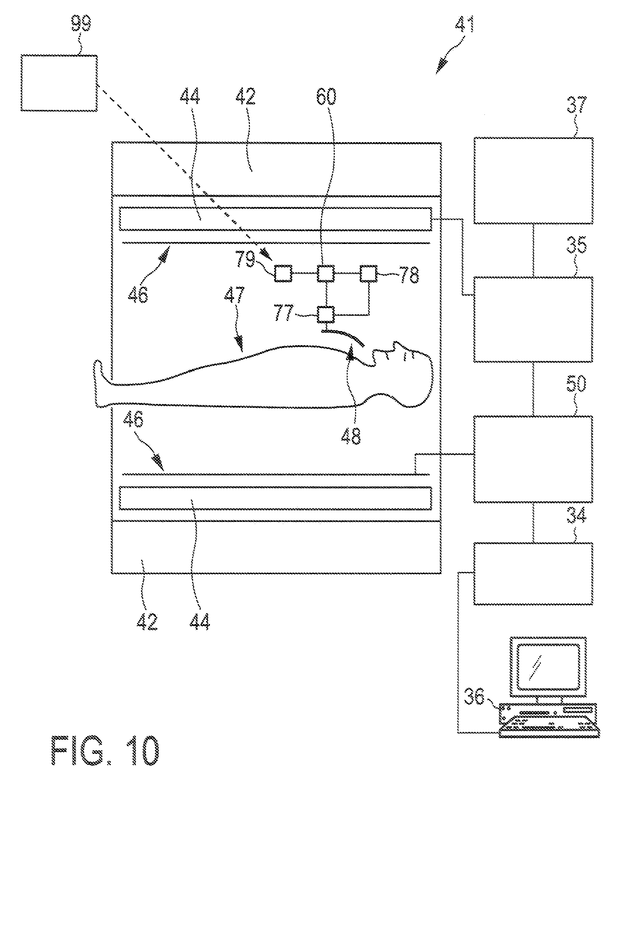

Fig. 10 shows schematically and exemplarily a magnetic resonance imaging system 41 for generating a magnetic resonance image of a person 47. The person 47 is located in an imaging region of the magnetic resonance imaging system 41. The magnetic resonance imaging system 41 includes a main field magnet 42 for generating a B0 field in the imaging region. Gradient coils 44 induce a gradient magnetic field across the B0 field, typically along three orthogonal axes. A whole body radio frequency coil 46 transmits radio frequency pulses to excite and manipulate resonance in the person 47 in the imaging region. The whole body radio frequency coil 46 optionally also receives radio frequency resonance signals from the imaging region. An electrical device 95 comprising a surface or other local radio frequency coil 48 receives the resonance signals. Optionally, the local coil can also induce and manipulate resonance. A sequence controller 35 controls the radio frequency and gradient coils 44 to implement a selected magnetic resonance imaging sequence. A sequence memory 37 stores these sequences.

The electrical device 95 further comprises a processing unit 77 for processing the received magnetic resonance signals, a sending unit 78 for sending the processed magnetic resonance signals to a magnetic resonance receiver 50, and a power coil 79. A battery apparatus 60 is connected to the electrical device 95 for powering the processing unit 77 and the sending unit 78 and for being rechargeable by using the power of power coil 79. The power coil 79 is adapted for receiving power inductively from a power transmission unit 99, which preferentially comprises a transmission coil and a power source for driving the transmission coil. The power transmission unit is shown schematically only in Fig. 10.

The magnetic resonance receiver 50 receives the magnetic resonance signals from the whole body radio frequency coil 46 and/or the local radiofrequency coil 48, and a reconstruction processor 34 reconstructs the received resonance signals into an image representation. The user interface 36 enables an operator to select imaging sequences to be performed, reconstruction operations, image formats and the like and displays reconstructed images.

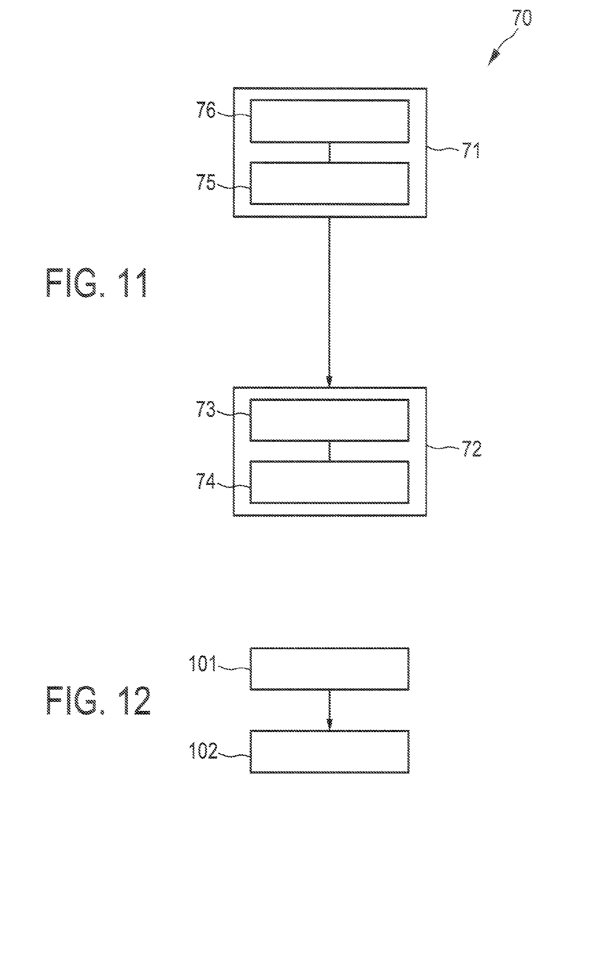

Fig. 11 shows schematically and exemplarily an inductive wireless power transmission system 70 for inductively and wirelessly transmitting power from a power transmitting unit 71 to a power receiving unit 72. The power transmitting unit 71 comprises an electrical device 75 including a coil, wherein the electrical device 75, in particular, the coil, is connected to a battery apparatus 76 in accordance with the invention. The power receiving unit 72 comprises an electrical device 73 including a coil, wherein the electrical device 73, in particular, the coil, is connected to a further battery apparatus 74 in accordance with the invention. The electrical device 75, in particular the coil of the electrical device 75, and the battery apparatus 76 of the power transmitting unit 71 are preferentially adapted to generate a varying magnetic field, which induces currents in the coil of the electrical device 73 of the power receiving unit 72, wherein the currents induced in the coil of the electrical device 73 of the power receiving unit, i.e. the received power, can, for example, be stored in the battery apparatus 74. In another embodiment only one of the units, either the power transmitting unit or the power receiving unit, can comprise the combination of an electrical device including a coil and a battery apparatus in accordance with the invention. The other unit can comprise other means for generating a varying magnetic field or for receiving the power, respectively. For example, another energy source can be used for generating the varying magnetic field or another storing unit can be used for storing the received power.

In the following a method for manufacturing a battery apparatus will be exemplarily described with reference to a flow charge shown in Fig. 12.

In step 101, an inner part 1 of a battery apparatus to be manufactured is provided, wherein the inner part 1 is a battery stack comprising at least two electrodes separated by a separator. Furthermore, a first non-metallic package and a second non-metallic package are provided.

The battery stack is preferentially the inner part of a rechargeable lithium ion battery.

The first non-metallic package is adapted for holding the battery electrolyte in the battery. The first and second packages can be present already or they can be manufactured, in particular, in order to provide the functions to hold the battery electrolyte in the battery and to protect the battery against fluid like moisture and oxygen. For example, a PECVD technique could be performed for depositing an inorganic layer like a silicon nitride, silicon oxide or aluminum oxide layer, on a plastic layer, as described above.

In step 102, the battery stack 1 is enclosed with the first package, the first package is enclosed with the second package, and the battery stack, i.e. the inner part, located in the first package is provided with the battery electrolyte. The inner part can be provided with the battery electrolyte, before the second package encloses the first package. However, it is also possible to provide the inner part with the battery electrolyte, if the first package encloses the inner part and the second package encloses the first package.

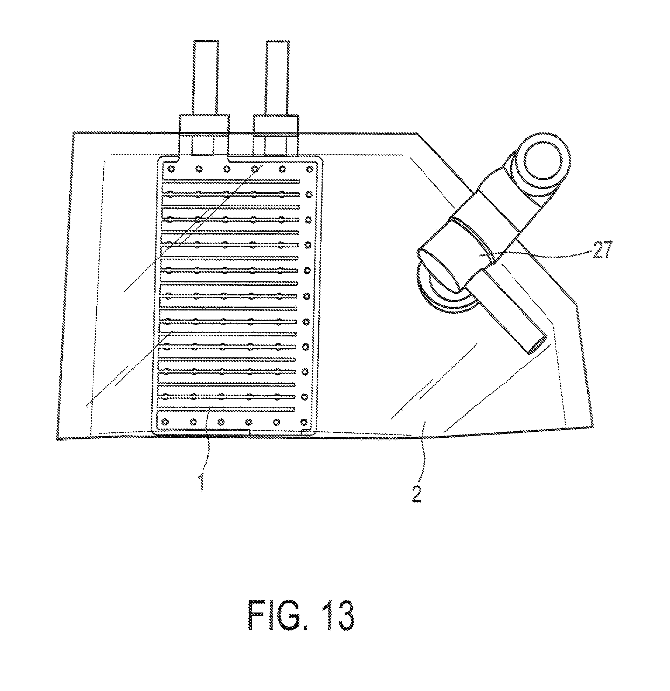

In an embodiment, firstly the inner part 1 is sealed in the first package as shown in Fig. 13. Fig. 13 shows schematically and exemplarily the inner part 1 enclosed in the first package 2, wherein a valve 27 is used to vacuum the first package and evacuate gases generated during battery formation. The first package can be moisture and oxygen permeable. In order to protect the inner part 1 from moisture and oxygen before it is enclosed in the second package, in particular, before it is sealed in the second package, the first package is sealed in an aluminum-plastic film 28 which is commonly used for rechargeable lithium ion batteries.

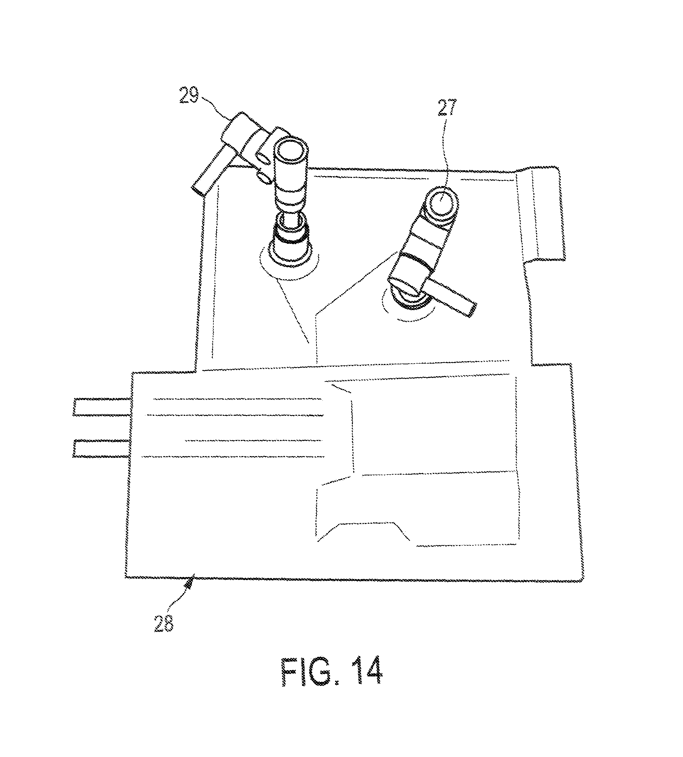

Fig. 14 shows schematically and exemplarily the aluminum-plastic film 28 enclosing the first package 2 and the inner part 1. The second valve 29 shown in Fig. 14 is used to vacuum the aluminum-plastic package formed by the sealed aluminum-plastic film 28. The inner part is then subjected to formation in the package formed by the aluminum-plastic film 28. After battery formation, the generated gases are evacuated from the first package through the first valve 27. In this embodiment, which uses the aluminum-plastic film 28, the aluminum-plastic film 28 and the two valves 27, 29 are removed before enclosing the first package into the second package.

The formation in the package is also known as activation. This formation or activation process is performed in order to activate the battery materials so as to obtain working batteries before they are shipped to customers. This formation or activation process has normally several charge/discharge cycles, for example, one to five charge/discharge cycles. The formation or activation process usually includes a degassing step as gasses are generated during the first cycle. A more detailed description of this formation or activation process is disclosed in "High energy density strategies: from hydride-forming materials research to battery integration", P.H.L. Notten et al., Journal of Power Sources 129, 2004, pages 45 to 54, which is herewith incorporated by reference.

Preferentially, after the aluminum plastic film 28 has been removed, i.e. after the degassing step, the first package is preferentially thermally sealed parallel to the edges of the inner part of the battery apparatus to be manufactured and the extra part of the first package, i.e. the part of the package which does not belong to the encasement formed by the first package, is cut off such that the resulting first package has almost the size of the inner part 1.

The battery electrolyte is preferentially injected into first package by using a syringe. For example, after the package shown in Fig. 14 has been vacuumed, battery electrolyte is injected into the inner part of battery apparatus 1 through valve 27 by using a syringe. After the syringe and/or the valve have been removed, the resulting hole can be closed by gluing or by thermally sealing.

The fluid barrier layer which is deposited on the plastic layer, in particular, for forming the second package, can also be a stack of silicon nitride/silicon oxide or a stack of silicon nitride/aluminum oxide or a stack of another combination of layers comprising at least two materials of the group consisting of silicon nitride, silicon oxide and aluminum oxide.

The enclosing of the first package by the second package is preferentially performed by gluing two components of the second package together, wherein the glue is blended right before the glue is applied to the edge of the second package. Before gluing, a getter is arranged between the two components. The sealing process, i.e. the process of attaching the two components together by using the glue, is carried out in a glove box, which is filled with an inert gas like nitrogen or argon. After sealing, the battery enclosed by the first package and the second package is left in the glove box under pressure for 24 hours in order for the glue to completely harden. The glue is preferentially a type of polymer material, wherein moisture might eventually penetrate the glue from a long-term perspective. To compensate for this effect and to protect the battery from any possible moisture, the getter is enclosed by the second package, i.e. the getter is sealed in the second package.

For the second package, i.e. the fluid-tight package, a NONON coated plastic layer can be used. NONON stands for SiₓN/SiO2/SiₓN/SiO2/SiₓN multiple-layer coating. The NONON coating is preferentially transparent.

If the first package and/or the second package use glass as a package material, this glass is preferentially a common window glass. The second package can be comprised of a housing and a lid being a glass housing and a glad lid, wherein the first package with the battery is located in the housing and the housing is sealed by using the lid. Two troughs 30 are preferentially made in the glass housing and/or the glass lid to accommodate the battery leads 20 shown in Fig. 7.

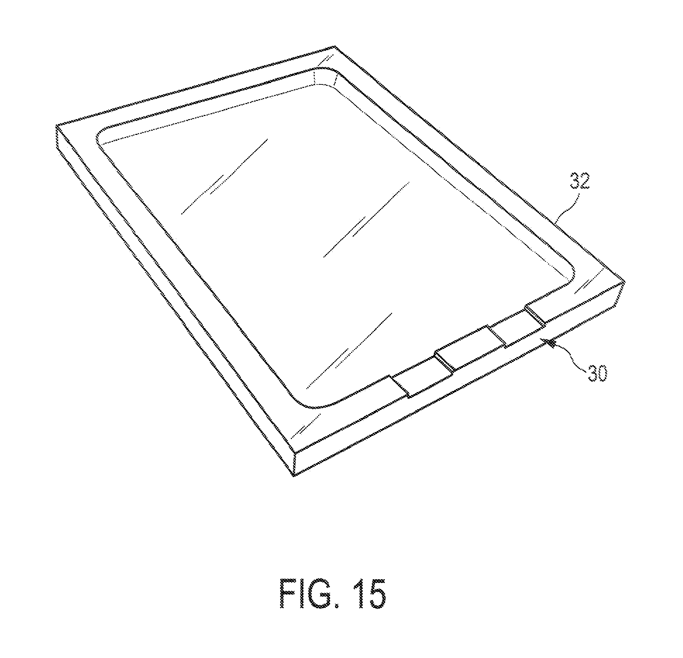

Fig. 15 shows schematically and exemplarily the glass housing 32 with the two troughs 30. After the first package with the inner part of the battery apparatus to be manufactured has been placed into the glass housing, the lid 31 and the housing 32 are sealed by gluing these components together.

The glue has preferentially two components which are blended right before the glue is applied to the edge of the glass housing 32. Prior to gluing, the glass is cleaned with an ultraviolet ozone surface treatment system in an attempt for the glue to obtain the best adhesion effect.

The sealing process is carried out in a glove box filled with an inert gas like nitrogen or argon. After sealing, the glass package 31, 32 is preferentially left in the glove box under pressure for 24 hours in order for the glue to completely harden.

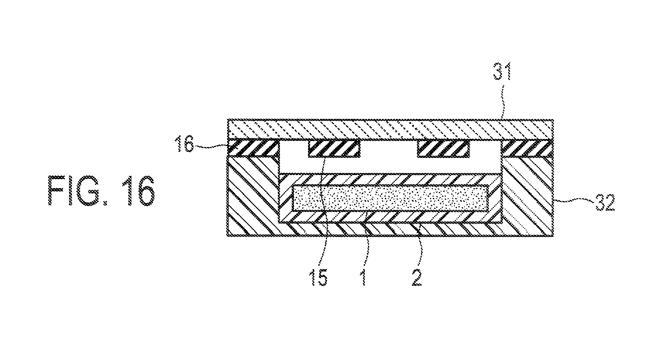

Since the glue is preferentially a type of polymer material, moisture can eventually penetrate the glue layer from a long-term perspective. To compensate for this effect and to protect the battery from any possible moisture, a getter, i.e. a moisture getter, is sealed in the glass housing 31, 32. A cross section of a battery apparatus made by using this glass package 31, 32 as a second package is schematically and exemplarily shown in Fig. 16.

As can be seen in Fig. 16, the battery stack 1 is enclosed by the first package 2 and the first package 2 with the battery stack 1 is located in the second package consisting of the glass housing 32, the glass lid 31 and the glue 16. Getter 15 is arranged within the glass housing.

If the first package and the second package are formed as a multi-layer package, for example, as described above with reference to Fig. 5, the inner part of the battery apparatus to be manufactured is preferentially hermetically sealed by sealing the multi-layer package 14 by thermally sealing the interior layer 9, which is preferentially a polypropylene layer. If the multi-layer package 14 is used for sealing the inner part of the battery apparatus to be manufactured, the above described aluminum-plastic film 28, which form an aluminum-plastic pouch, does not have to be used and, accordingly, does not have to be removed before sealing the battery apparatus to be manufactured.

The provided electrodes are slotted and the at least two electrodes with the sandwiched separator are stacked up together by using the lithylene technology. The lithylene technology uses polymer rivets, which help to maintain the electrode structural integrity, providing a very stable mechanical structure of the battery apparatus. The known lithylene technology is described in more detail in "High energy density strategies: from hydride-forming materials research to battery integration", P.H.L. Notten et al., Journal of Power Sources 129, 2004, pages 45 to 54, which is herewith incorporated by reference.

Rechargeable lithium ion batteries are widely used as power sources for many electronic devices. For some special applications, batteries need to be working in a varying magnetic field. In this case, the batteries should be comfortable with the magnetic field, meaning the presence of batteries has no/acceptable disturbance to the magnetic field. Conventional rechargeable lithium ion batteries disturb the magnetic field because eddy current are always induced in the metallic components of the rechargeable lithium ion batteries. Meanwhile, the batteries can be heated up to 50°C and above due to the induced eddy current. Consequently, these known batteries are incompatible to work in a varying magnetic field.

Since according to the invention, the first and second packages are non-metallic packages, eddy currents cannot be generated in the packaging, making the batteries suitable for magnetic field applications. Furthermore, since the electrodes are slotted so that current can only circulate in very small surface areas, the induced eddy currents in the electrodes are minimized, so as the heat generation in the batteries.

The battery, which is preferentially enclosed by the first and second packages, can be made by various assembling technologies such as lamination. Preferentially the battery stack is assembled by using the lithylene technology.

The battery apparatus can be used with any battery like a lithium-ion battery, NiMH battery, NiCd battery et cetera, which should be used in an alternating magnetic field.

Although in an above described embodiment the battery apparatus is used for powering a receiving coil of a magnetic resonance imaging system, the battery apparatus can also be used to power another element like another coil or an implant in a person. Furthermore, the battery apparatus can be used in another varying magnetic field.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or devices may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A battery apparatus comprising:
- an inner part (1) comprising at least electrodes (22, 23) and a battery electrolyte (92),
- at least a first non-metallic package (2) and a second non-metallic package (3), wherein the first package (2) encloses the inner part (1) and the second package (3) encloses the first package (2),
wherein the first package (2) and the second package (3) are adapted for holding the battery electrolyte (92) in the inner part (1) and for providing a fluid-tight protection.

2. The battery apparatus as defined in claim 1, wherein the first package (2) comprises a package layer being an electrolyte barrier layer (5).

3. The battery apparatus as defined in claim 1, wherein the second package (3) comprises a package material being a plastic material (7) coated with a fluid barrier layer (8).

4. The battery apparatus as defined in claim 3, wherein the fluid barrier layer (8) comprises at least one material of a group consisting of silicon nitride, silicon oxide and aluminum oxide.

5. The battery apparatus as defined in claim 1, wherein the second package (3) comprises a package material being glass.

6. The battery apparatus as defined in claim 1, wherein the first package (2) and the second package (3) are formed as a multi-layer package (14) comprising at least a first layer (8) being a sealant for holding the battery electrolyte (92) in the inner part (1), a second layer (10) for providing a fluid barrier and a third layer (11) being a protection layer, wherein the second layer (10) is sandwiched between the first and third layers.

7. The battery apparatus as defined in claim 1, wherein the electrodes (22, 23) are slotted.

8. Package material for sealing an inner part (1) of a battery apparatus (60), wherein the inner part (1) of the battery apparatus (60) comprises at least electrodes (22, 23) and a battery electrolyte (92), wherein the package material comprises at least a first non-metallic package material (2) and a second non-metallic package material (3), wherein the first package material (2) is adapted for enclosing the inner part (1) and wherein the second package material (3) is adapted for enclosing the second package material (3), wherein the first package (2) and the second package (3) are adapted for holding the battery electrolyte (92) in the inner part (1) and for providing a fluid-tight protection.

9. A method for manufacturing a battery apparatus, the method comprising the steps of:
- providing an inner part (1) of the battery apparatus comprising at least electrodes (22, 23) and a battery electrolyte (92),
- providing a first non-metallic package (2) and a second non-metallic package (3),
- enclosing the inner part (1) with the first package (2) and enclosing the first package (2) with the second package (3),
wherein the first package (2) and the second package (3) are adapted for holding the battery electrolyte (92) in the inner part (1) and for providing a fluid-tight protection.

10. A combination of an electrical device (95; 73; 75) and the battery apparatus (60) as defined in claim 1, wherein the electrical device (95; 73; 75) and the battery apparatus (60) are electrically connected to each other for powering the electrical device (95; 73; 75).

11. The combination as defined in claim 10, wherein the combination of the electrical device (95; 73; 75) and the battery apparatus (60) is adapted for being used in at least one of a magnetic resonance imaging system (41) and an inductive wireless power transmission system (70).

12. The combination as defined in claim 10, wherein the combination of the electrical device (95) and the battery apparatus (60) is adapted for being used in a magnetic resonance imaging system (41), wherein the electrical device (95) comprises a receiving coil (48) for receiving magnetic resonance signals and a processing unit (77) for processing the received magnetic resonance signals, wherein the battery apparatus (60) is adapted for powering the processing unit (77).

13. A magnetic resonance imaging system comprising the combination of the electrical device (95) and the battery apparatus (60) as defined in claim 10.

14. An inductive wireless power transmission system comprising a power transmitting unit (71) and a power receiving unit (72), wherein at least one of the power transmitting unit (71) and the power receiving unit (72) comprises the combination of the electrical device (73; 75) and the battery apparatus (74; 76) as defined in claim 10, wherein the electrical device (73; 75) is adapted to perform at least one of transmitting inductive power and receiving inductive power.
